# EUROPÄISCHE PATENTANMELDUNG

(11) **EP 4 730 167 A1**
(43) Veröffentlichungstag der Anmeldung: **22.04.2026**
(21) Anmeldenummer: 25205066.1
(22) Anmeldetag: 26.09.2025
(51) Int. Cl.: G06F 21/31, H04L 9/32, H04W 12/0471, H04W 12/08, H04W 12/30, G06F 21/32

(54) **TECHNIK ZUM SIGNIEREN VON DATEN MIT EINEM DIGITALEN FAHRZEUGSCHLÜSSEL**

(30) Priorität: 18.10.2024 DE 102024130380
(71) Anmelder: Bayerische Motoren Werke Aktiengesellschaft, 80809 München (DE)
(72) Erfinder: Fink, Matthias, 81541 München (DE)

(57) **Zusammenfassung**

Ein Verfahren zum Signieren von Daten mit einem digitalen Fahrzeugschlüssel (112) umfasst ein Empfangen einer Indikation (124) eines ausgewählten Signaturmodus, wobei der Signaturmodus unter mindestens einem ersten Signaturmodus (128, 132) und einem zweiten Signaturmodus (136) ausgewählt ist, wobei der mindestens eine erste Signaturmodus (128, 132) ein Signieren unter Mitwirken eines Benutzers (108) betrifft, und der zweite Signaturmodus (136) ein Signieren ohne Mitwirken des Benutzers (108) betrifft; ein Signieren (126) von Daten entsprechend dem ausgewählten Signaturmodus; ein Senden (140) der signierten Daten; und ein Empfangen einer Rückmeldung (148) bezüglich der signierten Daten.

## Beschreibung

Die Erfindung betrifft eine Technik zum Signieren von Daten mit einem digitalen Fahrzeugschüssel. Die Technik ist für eine Implementierung in einem Mobilgerät sowie in einem fahrzeugseitigen Backend vorgesehen.

Ein Kraftfahrzeug kann mittels eines Konzepts gesichert sein, das als "Digital Key" vom "Car-Connectivity-Consortium" (CCC) spezifiziert wird. Eine umfassende Beschreibung findet sich bspw. in der technischen Spezifikation "Digital Key Release 4". Das Konzept sieht vor, eine Sicherheitsfunktion des Kraftfahrzeugs, bspw. eine Zentralverriegelung und/oder eine Wegfahrsperre, auf der Basis eines asymmetrischen kryptografischen Verfahrens zu steuern. Einem Benutzer kann ein digitaler Fahrzeugschlüssel in Form einer kryptografischen Datenstruktur zugeordnet sein. Zur Authentifikation auf der Basis dieses Schlüssels wird eine drahtlose Verbindung zwischen einem Mobilgerät und dem Kraftfahrzeug verwendet.

Ein digitaler Fahrzeugschlüssel kann bspw. einen privaten und einen öffentlichen Teil umfassen. Der private Teil kann in einer gesicherten Umgebung eines Mobilgeräts abgelegt sein. Umgekehrt ist dem Kraftfahrzeug ein digitaler Schlüssel zugeordnet, dessen privater Teil in einer Steuereinrichtung an Bord abgelegt sein kann. Ein öffentlicher Teil ist seitens eines Benutzers bekannt. Zur Steuerung einer Sicherheits- bzw. Zugriffsfunktion erfolgt eine zweiseitige Authentifikation auf der Basis der jeweiligen privaten und öffentlichen Schlüsselanteile. Verläuft die Authentifikation erfolgreich, so wird eine angeforderte Sicherheitsfunktion am Kraftfahrzeug gesteuert, ein Zugriff auf bzw. eine Benutzung des Fahrzeugs ermöglicht etc.

Mit einem digitalen Fahrzeugschlüssel gem. einer CCC-Spezifikation kann eine digitale Signatur erstellt werden. Eine solche kann bspw. in einem Nachrichtenaustausch vorgesehen sein. Ein Beispiel ist die sog. Standard-Transaktion gem. CCC für den Aufbau eines sicheren Übermittlungskanals, bei der eine Überprüfung bzw. Verifikation der jeweiligen Gegenseite vorgesehen ist. Ein anderes Beispiel betrifft eine Applikation zur Handhabung eines digitalen Fahrzeugschlüssels auf einem Mobilgerät; eine solche Applikation soll in der Lage sein, auf eigene Initiative hin eine Signatur für unterschiedliche Daten zu erstellen.

Für die Erstellung einer solchen Signatur ist lt. CCC-Standard das Einholen einer Einwilligung des Benutzers verpflichtend, während eine Authentifizierung des Benutzers optional vorgesehen werden kann. Das Einholen der Einwilligung erfordert mindestens eine Ausgabe eines Popup-Fensters auf dem Mobilgerät, während eine Authentifikation noch komplexere Abläufe beinhaltet. Solche Maßnahmen verlängern und komplizieren jedoch einen übergeordneten Ablauf. Je nachdem, welche Daten signiert werden sollen, ist es jedoch unangemessen, dem Benutzer solche beschwerlichen Prozeduren aufzuerlegen. Für wenig sicherheitskritische Daten bleibt dann allerdings nur, auf eine Signaturerstellung mit Verifikation ganz zu verzichten, was aus Sicherheitsgesichtspunkten aber auch keine befriedigende Lösung ist.

Eine der vorliegenden Erfindung zu Grunde liegende Aufgabe besteht in der Bereitstellung eines verbesserten Konzepts für eine Technik zur Signaturerstellung und Verifikation basierend auf einem digitalen Fahrzeugschlüssel. Die Erfindung löst diese Aufgabe mittels der Gegenstände der unabhängigen Ansprüche. Unteransprüche geben bevorzugte Ausführungsformen wieder.

Ein erster Aspekt der vorliegenden Erfindung betrifft ein Verfahren zum Signieren von Daten mit einem digitalen Fahrzeugschlüssel. Das Verfahren kann benutzerseitig implementiert sein, bspw. auf einem Mobilgerät einer Person, auf dem der digitale Fahrzeugschlüssel abgelegt ist, und bevorzugt in einer Applikation zur Handhabung des digitalen Fahrzeugschlüssels auf dem Mobilgerät. Das Verfahren umfasst ein Empfangen einer Indikation eines ausgewählten Signaturmodus. Der Signaturmodus ist unter mindestens einem ersten Signaturmodus und einem zweiten Signaturmodus ausgewählt. Der mindestens eine erste Signaturmodus betrifft ein Signieren unter Mitwirken eines Benutzers. Der zweite Signaturmodus betrifft ein Signieren ohne Mitwirken des Benutzers. Das Verfahren umfasst weiterhin ein Initiieren eines Signierens von Daten entsprechend dem ausgewählten Signaturmodus; ein Senden der signierten Daten; und ein Empfangen einer Rückmeldung bezüglich der signierten Daten, also bspw. betreffend eine Überprüfung der signierten Daten.

Ein zweiter Aspekt der vorliegenden Erfindung betrifft ein Verfahren zum Überprüfen von mit einem digitalen Fahrzeugschlüssel signierten Daten. Das Verfahren kann etwa in einem fahrzeugseitigen Backend implementiert sein. Das Verfahren umfasst ein Senden einer Indikation eines ausgewählten Signaturmodus. Der Signaturmodus ist unter mindestens einem ersten Signaturmodus und einem zweiten Signaturmodus ausgewählt. Der mindestens eine erste Signaturmodus betrifft ein Signieren unter Mitwirken eines Benutzers. Der zweite Signaturmodus betrifft ein Signieren ohne Mitwirken des Benutzers. Das Verfahren umfasst weiterhin ein Empfangen von signierten Daten; ein Überprüfen der empfangenen signierten Daten; und ein Senden einer Rückmeldung basierend auf der Überprüfung der signierten Daten, also bspw. einer Rückmeldung bezüglich einer Aktion oder Operation, die basierend auf den überprüften Daten ausgeführt wird.

Bei einigen Ausführungsformen der Erfindung umfasst der mindestens eine erste Signaturmodus einen Signaturmodus, der eine Einwilligung bzw. Zustimmung des Benutzers betrifft, und/oder einen Signaturmodus, der eine Authentifizierung bzw. Authentifikation des Benutzers betrifft. Um eine Einwilligung des Benutzers zu erhalten, kann z.B. ein Popup-Fenster auf einem Display eines Mobilgeräts ausgegeben werden, und der Benutzer erteilt seine Einwilligung, indem das Popup-Fenster bspw. durch Tippen oder Klicken zum Verschwinden gebracht wird. Eine Authentifikation kann bspw. mittels eines Fingerabdrucksensors, einer Gesichtserkennung, Eingabe einer Passphrase etc. durchgeführt werden. Das Einholen einer Einwilligung und/oder Authentifikation des Benutzers gestaltet sich für den Benutzer aufwendig, es verzögert andere Abläufe, und mindert insgesamt den Benutzerkomfort. Erfindungsgemäß wird vorgeschlagen, für bestimmte Daten auf das Einholen einer Einwilligung oder Authentifikation zu verzichten, ohne jedoch auf eine Signaturerstellung zu verzichten. Der erfindungsgemäß vorgeschlagene zweite Signaturmodus kommt ohne Mitwirkung des Benutzers aus, und ermöglicht daher eine komfortablere und schnellere Verifikation.

Ausführungsformen der Erfindung sehen mehrere Signaturmodi vor, von denen mindestens einer ohne Mitwirken des Benutzers auskommt. Bei einer Ausführungsform bedeutet "ohne Mitwirken" einen Signaturmodus, bei dem eine Signatur ohne Einwilligung des Benutzers und ohne Authentifikation des Benutzers erstellt wird (wie dies bei anderen Signaturmodi verlangt wird). Ein solcher Signaturmodus kann bspw. vorgesehen werden, wenn Daten oder mit den Daten verknüpfte Aktionen nicht in erheblichem Maße sicherheitsrelevant sind, so dass einerseits eine Durchführung einer für den Benutzer lästigen und zeitraubenden Einwilligungs- und/oder Authentifikationsprozedur nicht angemessen ist, andererseits aber auf gesicherte Abläufe nicht verzichtet werden soll. Bei einer Ausführungsform stellt der erfindungsgemäße Signaturmodus somit, in Ergänzung zu den beiden Signaturmodi betreffend eine Einwilligung oder Authentifikation des Benutzers, eine weitere (dritte) spezifische Kombination bzw. Balance von Sicherheit und Benutzerkomfort bereit.

Bei bestimmten Ausführungsformen der Erfindung ist eine erfolgreiche Durchführung einer Verifikation der erstellten Signatur eine Voraussetzung für eine Durchführung einer Aktion, Operation, Funktionalität, Funktion, den Ablauf eines Vorgangs, Prozesses, einer Aktivität, Maßnahme etc., bspw. in einem Backend. Einige Ausführungsformen können bspw. eine Signaturerstellung für einen einfachen oder einseitig gerichteten Datenfluss betreffen (im Unterschied zu einem Nachrichtenaustausch, Handshake, etc.), sowie eine auf dem Datenfluss basierende Aktion, wie etwa eine Zuordnung eines Benutzerkontos (basierend auf einer entsprechenden Benutzerkennung) zu einem digitalen Fahrzeugschlüssel.

Bei einigen Ausführungsformen der Erfindung umfasst das Verfahren gemäß dem ersten Aspekt der Erfindung weiterhin ein Übergeben des ausgewählten Signaturmodus an ein gesichertes Element; und ein Entgegennehmen der entsprechend dem ausgewählten Signaturmodus signierten Daten von dem gesicherten Element. Hierdurch gestaltet sich die Erstellung der Signatur besonders sicher.

Bei einigen Ausführungsformen werden die zu signierenden Daten ebenfalls an das gesicherte Element übergeben. Das gesicherte Element signiert die übergebenen Daten mit dem in dem gesicherten Element abgelegten digitalen Fahrzeugschlüssel und übergibt Daten und Signatur bspw. in einer vordefinierten Datenstruktur mit mehreren Datenfeldern etc.

Bei einigen Ausführungsformen ist der ausgewählte Signaturmodus der zweite Signaturmodus, und das gesicherte Element führt das Signieren ohne Mitwirken des Benutzers durch. Hierbei kann bspw. jede Ausgabe auf einer Benutzerschnittstelle unterbleiben, oder es kann zumindest jede Ausgabe unterbleiben, die eine Mitwirkung des Benutzers erfordert, wie etwa die Ausgabe eines Popup-Fensters, eines Fensters, dass auf die Durchführung einer Authentifikation hinweist etc. Hierdurch kann bei Verwendung des zweiten Signaturmodus ein Komfortgewinn für den Benutzer erzielt werden, während gleichzeitig in gesicherter Weise eine Signatur erzeugt wird.

Bei bevorzugten Ausführungsformen des ersten Aspekts der Erfindung erfolgt ein Signieren ohne Mitwirkung des Benutzers unmerklich für den Benutzer, d.h., der Ablauf erfolgt aus Benutzersicht in einem Hintergrund, während in einem Vordergrund ein anderer Ablauf erfolgt, bspw. eine Kopplung von Mobilgerät und Kraftfahrzeug mittels Ablage des digitalen Fahrzeugschlüssels im Mobilgerät, ein Schlüsselteilen bzw. eine Schlüsselweitergabe, etc., oder es erfolgt kein anderer Ablauf im Vordergrund, d.h., das Mobilgerät erscheint inaktiv, passiv, in einem Wartezustand etc.

Bei einigen Ausführungsformen ist für die Übermittlung der Indikation des ausgewählten Signaturmodus ein Informationsfeld vorgesehen, und zwar sind mindestens zwei unterschiedliche vorbestimmte Werte für die Indikation des jeweiligen Signaturmodus vorgesehen. Bspw. kann mindestens ein spezifischer Wert für die Indikation des ersten Signaturmodus (mit Mitwirkung des Benutzers) vorgesehen sein, und ein unterschiedlicher spezifischer Wert ist für die Indikation des zweiten Signaturmodus (ohne Mitwirkung des Benutzers) vorgesehen.

Bei dem Informationsfeld kann es sich etwa um ein Datenfeld eines SIGN-Kommandos gemäß einer CCC-Spezifikation handeln. Das Datenfeld kann bspw. ein Tag 93h (bzw. 0x93, also in hexadezimaler Schreibweise) mit einer Länge und einer Beschreibung bzw. einem Wert handeln, der jeweils einen bestimmten Signaturmodus (von dem mindestens einen ersten und dem zweiten Signaturmodi) beschreibt.

Bei manchen Ausführungsformen des zweiten Aspekts der Erfindung entscheidet das Backend über den anzuwendenden Signaturmodus. So kann bspw. für bestimmte Serviceanforderungen eine Authentifikation des Benutzers verpflichtend vorgesehen sein. Bei anderen Ausführungsformen kann das Mobilgerät bzw. eine App auf dem Mobilgerät über den Signaturmodus autonom entscheiden. Bei einigen dieser Ausführungsformen umfasst das Verfahren weiterhin ein Empfangen einer Anforderung betreffend das Signieren; ein Überprüfen der empfangenen Anforderung; und ein Auswählen des Signaturmodus unter dem mindestens einen ersten Signaturmodus und dem zweiten Signaturmodus basierend auf dem Überprüfen. Diese Ausführungsformen stellen Flexibilität bei der Entscheidung über den anzuwendenden Signaturmodus bereit.

Bei einigen Ausführungsformen des zweiten Aspekts der Erfindung umfasst das Überprüfen der empfangenen signierten Daten ein Überprüfen einer Signatur basierend auf dem digitalen Fahrzeugschlüssel. In einem Backend kann z.B. ein öffentlicher Schlüsselanteil des digitalen Fahrzeugschlüssels vorliegen, mit dem die Überprüfung durchgeführt werden kann.

Bei einigen dieser oder anderer Ausführungsformen kann das Überprüfen der empfangenen signierten Daten ein Überprüfen einer Benutzereingabe oder einer sonstigen vorgenommenen Benutzerhandlung betreffend eine Aktion, Operation etc. betreffen. Die vorgenommene Benutzereingabe oder -handlung muss nicht unmittelbar eine durchzuführende Aktion betreffen. So kann bspw. ein vom Benutzer ausgelöstes Ablegen eines digitalen Fahrzeugschlüssels im Mobilgerät ein Auslöser für eine Zuordnung, im fahrzeugseitigen Backend, eines Benutzerkontos zu dem zugeordneten digitalen Fahrzeugschlüssel sein.

Bei bestimmten Ausführungsformen kann das Verfahren gemäß dem zweiten Aspekt der Erfindung, nach erfolgreicher Überprüfung, ein Durchführen einer Aktion, Operation, etc. umfassen. Die Rückmeldung basierend auf der Überprüfung der signierten Daten kann eine Rückmeldung betreffend eine (bspw. erfolgreiche) Durchführung der Aktion umfassen. Die Rückmeldung kann eine Ausgabe über eine Benutzerschnittstelle des Mobilgeräts umfassen, bspw. ein Hinweis auf die vorgenommene Aktion, die jedoch keine Reaktion des Benutzers erfordert. Bei anderen Ausführungsformen wird auf eine solche Ausgabe verzichtet, d.h., der Signaturvorgang und/oder die durchgeführte Aktion findet vollkommen im Hintergrund statt.

Ein weiterer Aspekt der vorliegenden Erfindung betrifft ein Mobilgerät, welches zum Signieren von Daten mit einem digitalen Fahrzeugschlüssel nach einem hierin beschriebenen Verfahren ausgebildet ist. Unter einem "Mobilgerät" soll hierin ein Tablet oder Smartphone, eine Smartwatch, ein Smartband, Smartring etc. verstanden werden, allgemein jedoch jegliches Gerät, auf welchem ein digitaler Fahrzeugschlüssel, ein zugeteilter Fahrzeugschlüssel (bei einem "Key Sharing") etc. abgelegt werden kann, und welches für einen Zugriff auf ein Kraftfahrzeug verwendet werden kann. Dies könnte also auch eine Konstellation eines Mobilgeräts mit einer Smartcard sein, oder jede andere Konstellation oder jedes andere, auch zukünftige Gerät, welche bzw. welches über die erforderlichen Prozessorkapazitäten, Speicherkapazitäten etc. verfügt.

Bei einer Ausführungsform kann das Mobilgerät eine gesicherte Umgebung und/oder ein gesichertes Element zur Ablage des digitalen Fahrzeugschlüssels umfassen. Bei einigen Ausführungsformen kann die gesicherte Umgebung oder das gesichertes Element bspw. mittels eines kryptographischen Prozessors bereitgestellt werden. Bei einigen konkreten Ausführungsformen kann es sich bspw. bei der gesicherten Umgebung oder dem gesicherten Element bspw. um ein HSM ("Hardware Security Module"), TPM ("Trusted Platform Module"), ein "Secure Enclave", ein TEE ("Trusted Execution Environment") und/oder ein gesichertes Element im Sinne eines "Secure Elements" handeln. In einer solchen gesicherten Umgebung kann bspw. ein elektronischer, kryptographischer bzw. digitaler Fahrzeugschlüssel abgelegt sein, ein abgeleiteter Fahrzeugschlüssel, ein Zertifikat etc.

Auf dem Mobilgerät kann eine Software, eine Applikation ("App") etc. installiert sein, welche eine geräteseitige Steuerung des Signaturvorgangs implementiert, ggf. einschließlich einer Interaktion mit dem gesicherten Element. Die App kann bspw. für eine Handhabung des digitalen Fahrzeugschlüssels in Bezug auf ein Kraftfahrzeug bereitgestellt werden, etwa von einem Hersteller des Fahrzeugs.

Ein nochmals weiterer Aspekt der vorliegenden Erfindung betrifft einen Server etwa in einem Backend für das Fahrzeug, der zum Überprüfen von signierten Daten mit einem digitalen Fahrzeugschlüssel gemäß einem der hierin beschriebenen Verfahren ausgebildet ist. Bei dem Server kann es sich auch um mehrere Server, eine Serverlandschaft etc. handeln. Der oder die Server kann bzw. können bspw. von einem Hersteller des Fahrzeugs betrieben werden. Eine serverseitige Software bspw. für ein operatives und/oder administratives Schlüsselmanagement kann erfindungsgemäße Verfahren implementieren.

Ein wiederum weiterer Aspekt der vorliegenden Erfindung betrifft ein System, welches ein Kraftfahrzeug umfasst, das zur Ablage eines digitalen Fahrzeugschlüssels ausgebildet ist. Das System umfasst weiterhin ein Mobilgerät, ausgebildet zum Signieren von Daten mit dem digitalen Fahrzeugschlüssel gemäß einem hierin beschriebenen Verfahren. Das System umfasst weiterhin einen Backend-Server, ausgebildet zum Überprüfen von signierten Daten mit dem digitalen Fahrzeugschlüssel gemäß einem hierin beschriebenen Verfahren.

Die Erfindung wird nun mit Bezug auf die beigefügten Zeichnungen genauer beschrieben, in denen:
- Figur 1: ein System;
- Figur 2A: ein Ablaufdiagramm eines ersten Verfahrens;
- Figur 2B: ein Ablaufdiagramm eines zweiten Verfahrens; und
- Figur 3: ein Ablaufdiagramm eines dritten Verfahrens;
illustriert.

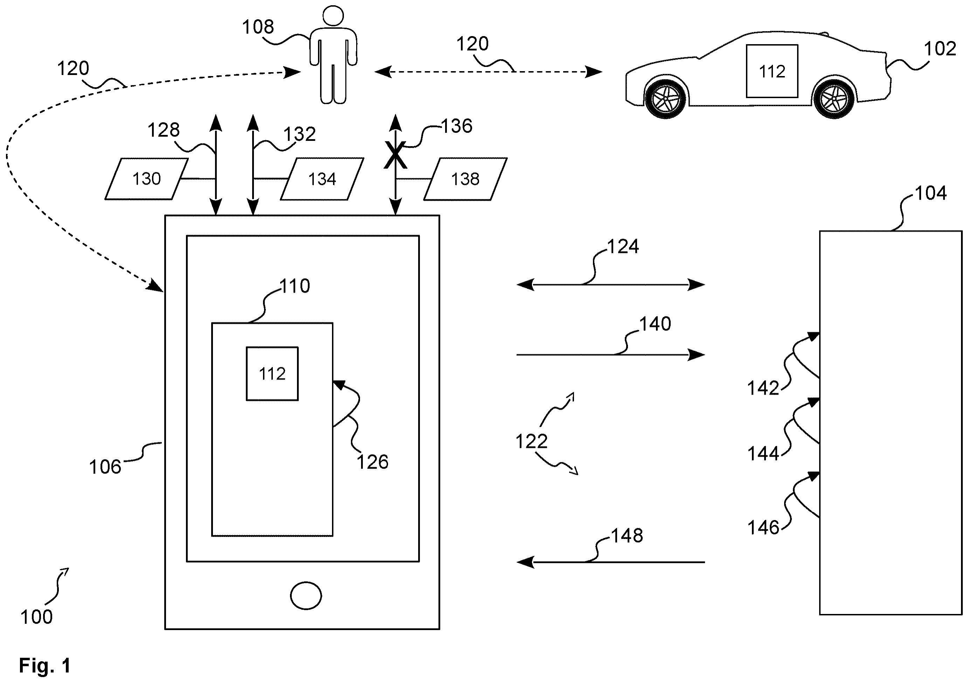

Fig. 1 zeigt in schematischer Form ein System 100 mit einem Kraftfahrzeug 102, einem Server 104 in einem Backend für das Fahrzeug 102, und einem Mobilgerät 106 eines Benutzers 108.

Das Bezugszeichen "104" wird nachfolgend sowohl dazu benutzt, um allgemein ein bzw. das Backend 104 (insbesondere für das Fahrzeug 102) zu bezeichnen, als auch dazu benutzt, um konkret den Server 104 zu bezeichnen, wobei es sich bei dem Server 104 auch um eine Mehrzahl von miteinander verbundenen Servern handeln kann.

Das Mobilgerät 106 verfügt über ein gesichertes Element 110, bei dem es sich um ein "Secure Enclave", ein TEE etc. handeln kann. Ganz allgemein kann das gesicherte Element 110 bspw. von einem kryptographischen Prozessor bereitgestellt werden.

In dem gesicherten Element 110 ist ein digitaler Fahrzeugschlüssel 112 für das Fahrzeug 102 abgelegt. Genauer gesagt, liegt in dem gesicherten Element 110 ein Endpunkt vor (eine Datenstruktur gem. CCC), welche den digitalen Fahrzeugschlüssel 112 auf dem Mobilgerät 106 repräsentiert. Im Fahrzeug 102 liegt ein entsprechender Endpunkt vor, welcher den digitalen Fahrzeugschlüssel 112 in der Form repräsentiert, wie er im Fahrzeug 102 abgelegt ist. Die Einzelheiten der Repräsentation des digitalen Fahrzeugschlüssels 112 im Mobilgerät 106 einerseits und im Fahrzeug 102 andererseits sind dem Fachmann geläufig und werden daher hier nicht weiter beschrieben.

Es ist anzumerken, dass eine nachfolgend beschriebene Kommunikation zwischen Mobilgerät 106 und Backend 104 bspw. auf einer Verbindung oder mehreren Verbindungen auf Mobilfunkbasis beruhen kann und/oder auf drahtlosen Verbindungen mit kurzer Reichweite, bei denen bspw. das Fahrzeug 102 als eine Relaisstation zur Weiterleitung der Kommunikation zwischen Mobilgerät 106 und dem oder einem Backend-Server 104 dienen kann. Hierauf wird in der weiteren Beschreibung aus Gründen der Übersichtlichkeit nicht weiter eingegangen.

Der CCC-Standard sieht vor, dass mit einem digitalen Fahrzeugschlüssel digitale Signaturen erstellt werden können ("digitale Signaturen" werden hierin gelegentlich verkürzend nur als "Signaturen" bezeichnet). Die Erstellung und Überprüfung bzw. Verifikation von Signaturen kann bei einem einseitigen oder zweiseitigen Nachrichtenaustausch vorgesehen sein. Es kann bspw. vorgesehen sein, dass eine Applikation oder App zur Handhabung des digitalen Fahrzeugschlüssels 112 auf dem Mobilgerät 106 eine Signatur für beliebige Daten ("arbitrary data") erstellt.

Eine CCC-Spezifikation sieht hierfür ein "SIGN"-Kommando vor. Genauer gesagt, sind Datenfelder des SIGN-Kommandos dafür vorgesehen, anzugeben, ob für eine Signaturerstellung eine Authentifikation des Benutzers 108 erforderlich ist oder nicht, bzw. ob eine solche Authentifikation durchgeführt wurde oder nicht, vgl. das Verwendungs-Tag ("Usage-Tag") 93h bzw. 0x93.

Genauer gesagt, kann für die Erstellung eines Nachweises der Verifikation der beliebigen Daten ("Data Attestation") eine Einwilligung bzw. Zustimmung des Benutzers 108 zwingend vorgesehen sein, während eine Authentifikation des Benutzers 108 optional ist.

Soll also eine Signaturerstellung auf einer Einwilligung des Benutzers 108 beruhen, so wird dem Benutzer 108 ein Popup-Fenster angezeigt, welches dem Benutzer mitteilt, dass der digitale Fahrzeugschlüssel 112 verwendet wird, um eine Signatur zu erstellen. Das oben erwähnte Verwendungs-Tag würde dann angeben, dass eine Benutzerauthentifizierung nicht durchgeführt wurde.

Soll eine Benutzer-Authentifikation durchgeführt werden, bei der eine explizite Authentifikation des Benutzers 108 erforderlich ist, also bspw. eine Eingabe einer PIN ("Persönliche Identifikationsnummer"), eines Passworts, Durchführung einer Gesichtserkennung etc., gibt das Verwendungs-Tag 93h an, dass eine Benutzerauthentifizierung durchgeführt wurde.

Sind nur diese beiden Signaturmodi verfügbar, erfordert die Durchführung einer Signaturerstellung für beliebige Daten immer mindestens die Ausgabe eines Popup-Fensters auf dem Mobilgerät 106 sowie eine entsprechende Benutzerintervention (d.h., eine entsprechende Mitwirkung des Benutzers 108). Diese Art der Signaturerstellung kann in gewissen Fällen jedoch für den Benutzer 108 unangemessen sein, bspw. wenn dadurch eine anderweitige Interaktion des Benutzers 108 mit dem Mobilgerät 106 unterbrochen, verlängert und/oder verkompliziert wird. Dies kann bspw. der Fall sein während der Durchführung von komplexen Abläufen wie etwa einer Ablage des digitalen Fahrzeugschlüssels 112 für das Fahrzeug 102 im Mobilgerät 106, oder einem Schlüsselteilen bzw. einer Schlüsselweitergabe etc.

Ein Ansatz wäre, in solchen Fällen auf die Erstellung (und Verifikation) einer Signatur ganz zu verzichten. Dadurch wird allerdings eine Sicherheit kompromittiert, d.h. ein Sicherheitskonzept würde lückenhaft.

Erfindungsgemäß wird stattdessen vorgeschlagen, den oben beschriebenen Ansatz mit den beiden Modi "Einwilligung des Benutzers" und "Benutzer-Authentifikation" um einen dritten Modus zu ergänzen und zu erweitern. Dieser Modus könnte mit "Stillschweigend" (im Englischen "Silent" oder "Silence") bezeichnet werden, oder könnte als Hintergrund-Modus bezeichnet werden, da er ohne die Einwilligung des Benutzers und ohne die Benutzer-Authentifikation abläuft, die bei den beiden anderen Modi verlangt werden: Bei dem Hintergrund-Modus wird eine Signatur aus Benutzersicht im Hintergrund erstellt, d.h., ohne dass wie bei den anderen Modi eine Benutzerintervention erforderlich wäre, und unmerklich für den Benutzer, d.h., ohne Ausgabe auf einer Benutzerschnittstelle des Mobilgeräts 106 (oder zumindest ohne eine Ausgabe, auf die der Benutzer 108 reagieren müsste).

Der vorgeschlagene Signaturmodus ermöglicht eine Signaturerstellung für Anwendungsfälle mit geringen Sicherheitsrisiken, jedoch unter Beibehaltung eines Sicherheitsniveaus, bei dem der auf dem Mobilgerät 106 gesichert abgelegte digitale Fahrzeugschlüssel 112 für die Signaturerstellung verwendet wird, d.h., es muss nicht ganz auf eine Signaturerstellung (und Verifikation) verzichtet werden.

Ein typischer Anwendungsfall, der eine Benutzer-Authentifikation erfordern könnte, könnte etwa ein Kauf eines teuren Artikels für das Privatfahrzeug 102 des Benutzers 108 in einer App auf dem Mobilgerät 106 sein (wenn diese App zur Handhabung des digitalen Schlüssels 112 ausgebildet ist). Ein typischer Anwendungsfall, der eine Einwilligung des Benutzers 108 erfordern könnte, könnte etwa eine Anforderung für eine Schlüsselweitergabe des Schlüssels 112 sein.

Ein typischer Anwendungsfall, für den eine erfindungsgemäß vorgeschlagene Signaturerstellung "im Hintergrund", d.h., ohne Mitwirkung des Benutzers, vorgesehen sein könnte, könnte etwa eine Bindung bzw. Zuordnung einer fahrzeugseitigen oder geräteseitigen Konto-ID des Benutzers 108 zum digitalen Fahrzeugschlüssel 112 sein. Ein Vorgang einer solchen Zuordnung könnte im Backend 104 ablaufen und könnte durch andere Vorgänge ausgelöst werden, wie bspw. eine Erstellung eines neuen Benutzerkontos, eine Ablage des digitalen Fahrzeugschlüssels 112 auf dem Mobilgerät 106, etc.

Bei einem Ausführungsbeispiel eines Sicherheitskonzepts könnten weitere Anwendungsfälle für eine erfindungsgemäße Signaturerstellung im Hintergrund bspw. Daten betreffen, die nicht während eines zweiseitigen Nachrichtenaustauschs übermittelt werden, sondern in einem einseitigen Nachrichtenfluss, bspw. Daten, die an ein fahrzeugseitiges oder geräteseitiges Backend übermittelt werden. Andere Sicherheitskonzepte sind jedoch auch denkbar.

Der Backend-Server 104 kann einen bestimmten Signaturmodus von zwei oder drei (oder mehr) definierten Signaturmodi verlangen. Abhängig davon, wie sicherheitskritisch ein Anwendungsfall ist, wie hoch ein Schadenspotenzial ist etc., kann der Server 104 z.B. einen Signaturmodus verlangen, der im Hintergrund abläuft, kann einen Signaturmodus mit einer Einwilligung des Benutzers verlangen, oder kann sogar einen Signaturmodus mit einer Benutzer-Authentifikation verlangen und vorgeben. Bei der Verifikation der erstellten Signatur im Backend 104 (oder bei einer anderen Instanz) wird der für die Erstellung vorgegebene Signaturmodus berücksichtigt. Auf diese Weise kann verhindert werden, dass eine kompromittierte App auf dem Mobilgerät 106 eigenständig eine Signatur erstellt und auf diese Weise das Sicherheitskonzept unterläuft.

Bei einem Ausführungsbeispiel, dass auf einer CCC-Spezifikation basiert, muss für eine backend-seitige Durchsetzung das Verwendungs-Tag (93h) eines SIGN-Kommandos alle Signaturmodi repräsentieren können. Enthält das Verwendungstag etwa den Wert (Länge 4 Bytes) D074DA4Fh, kann dies eine Angabe betreffend einen Signaturmodus einer Benutzer-Authentifikation sein, und enthält das Verwendungs-Tag den Wert FC6F4C17h, kann dies eine Angabe betreffend einen Signaturmodus einer Einwilligung des Benutzers sein. Dem erfindungsgemäß vorgeschlagenen (z.B., dritten) Signaturmodus für ein Signieren im Hintergrund sollte entsprechend ein vorgegebener Wert XXXXXXXXh zugeordnet sein, wobei jedes "X" individuell einen Wert zwischen 0...F annehmen kann.

Bei einem schematischen Ausführungsbeispiel, und unter erneuter Bezugnahme auf Fig. 1, interagiert der Benutzer 108 in einem Vorgang 120 (der eine Benutzereingabe oder mehrere Benutzereingaben umfassen kann) mit dem Mobilgerät 106, bspw. um ein Koppelung ("Owner Pairing") durchzuführen, bei welcher der digitale Fahrzeugschlüssel 112 für das Fahrzeug 102 im Mobilgerät 106 abgelegt wird. Nach erfolgreichem Abschluss des Vorgangs 120 soll eine Bindung einer Konto-ID des Benutzers 108 an den digitalen Fahrzeugschlüssel 112 (wie im Backend 104 hinterlegt) im Backend 104 erfolgen. Dieser zusätzliche Vorgang 122 hat eine geringe Sicherheitsrelevanz, sollte aber nicht völlig ungesichert ablaufen. Eine Signaturerstellung mit Benutzerintervention wäre jedoch unangemessen und für den Benutzer 108 verwirrend und störend.

Daher umfasst der Vorgang 122 eine Signaturerstellung ohne Benutzerintervention, wie nachfolgend beschrieben. Zunächst fordert eine App auf dem Mobilgerät 106 in einem Anforderung 124 vom Backend 104 einen Modus einer Signaturerstellung, und erhält vom Backend 104 eine Vorgabe eines Signaturmodus, bspw. basierend auf einem vordefinierten Sicherheitskonzept, bei dem für bestimmte Daten bestimmte Sicherheitsanforderungen definiert werden. In einem Vorgang 126 erstellt das gesicherte Element 110 basierend auf dem dort abgelegten digitalen Fahrzeugschlüssel 112 ein Signatur gemäß dem vorgegebenen Signaturmodus.

Genauer gesagt, kann das Backend 104 selektiv einen von drei Signaturmodi vorgeben, und das gesicherte Element 110 setzt diese Vorgabe um. Ein Signaturmodus 128 erfordert eine Einwilligung des Benutzers 108, bspw. ein Anklicken eines Popup-Fensters auf einem Display des Mobilgeräts 106. Eine Indikation 130 (bspw. in Form des oben beschriebenen Verwendungs-Tags oder eines vergleichbaren Tags) einer entsprechend erfolgten Mitwirkung des Benutzers 108 gelangt an das Mobilgerät 106, genauer gesagt an das gesicherte Element 110, und nur wenn die Indikation 126 vorliegt, erstellt das gesicherte Element 110 die Signatur. Ein Signaturmodus 132 erfordert eine Authentifikation des Benutzers 108, bspw. unter Verwendung eines Fingerabdrucksensors des Mobilgeräts 106. Erst wenn eine Indikation bzw. ein Nachweis 134 der erfolgten Mitwirkung des Benutzers 108 (Authentifikation) an das gesicherte Element 110 gelangt, erstellt das Element 110 die Signatur.

Ein (dritter, weiterer, letzter) Signaturmodus 136 erfordert keine Mitwirkung des Benutzers 108 wie bei den Modi 128, 132. Wird dieser Signaturmodus 136 vorgegeben, erstellt das gesicherte Element die geforderte Signatur basierend auf übergebenen Daten und dem digitalen Fahrzeugschlüssel 112 ohne auf eine Indikation einer Mitwirkung des Benutzers (wie die Indikation 130 oder 134) zu warten, denn es gibt keine solche Indikation, wie in Fig. 1 angedeutet, vgl. Bezugszeichen 138. Der Signaturvorgang 122 läuft (wenn basierend auf dem Signaturmodus 136) läuft vielmehr im Hintergrund ab, also ohne Mitwirkung und unmerklich für den Benutzer 108.

Im weiteren Verlauf des Vorgangs 122 sendet das Mobilgerät 106 (bzw. die ausführende App) die signierten Daten in einer Übermittlung 140 an das Backend 104. Hier wird ggf. in einem Vorgang 142 die Signaturerstellung überprüft, d.h., es wird festgestellt, welcher Signaturmodus vorgegeben war, und für die Signaturmodi 128 bzw. 132 ist zu überprüfen, ob die jeweilige Mitwirkung des Benutzers 108 am Gerät 106 erfolgt ist. Für den Signaturmodus 136 entfällt eine solche Überprüfung, da keine Mitwirkung erforderlich ist.

In einem Vorgang 144 wird die vom gesicherten Element 110 erstellte Signatur überprüft. Bei erfolgreicher Überprüfung wird in einem Vorgang 146 eine angeforderte Aktion durchgeführt, bspw. eine Zuordnung einer Konto-ID zum digitalen Fahrzeugschlüssel 112. In einem Vorgang 148 wird die Durchführung der Aktion und damit implizit die erfolgreiche Überprüfung der Signatur und der signierten Daten bestätigt.

Statt der in Fig. 1 dargestellten Signaturmodi 128, 132 könnte es noch weitere Signaturmodi mit einer Mitwirkung des Benutzers 108 geben. Bspw. könnten mehrere Signaturmodi betreffend eine Authentifikation des Benutzers jeweils eine ganz bestimmte Form der Authentifikation fordern, also etwa Gesichtserkennung, Passworteingabe, etc. Alternativ könnte es auch nur einen einzigen Signaturmodus geben, der eine Benutzerintervention erfordert, bspw. eine Reaktion auf ein Popup-Fenster, so dass insgesamt nur zwei Signaturmodi zur Verfügung stehen, ein Modus mit Mitwirkung des Benutzers, und ein Modus ohne Mitwirkung des Benutzers.

Obwohl die Indikation 130, 134 bzw. 138 zum erleichterten Verständnis in Fig. 1 in Zuordnung zu den Benutzerinterventionen 128 und 132 bzw. dem Fehlen einer Benutzerintervention 138 dargestellt sind, ist es dem Fachmann ersichtlich, dass diese Indikationen 130, 134, 138 als unterschiedliche Werte des Verwendungs-Tags in einem SIGN-Kommando repräsentiert sein könnten, wobei das Backend 104 selektiv einen dieser Werte für eine Signaturerstellung vorgibt.

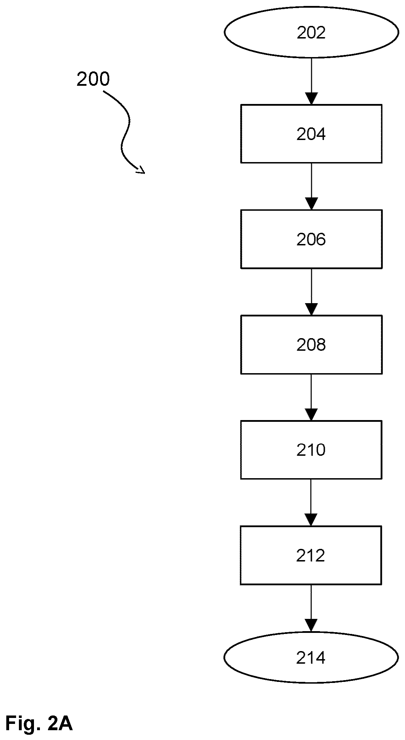

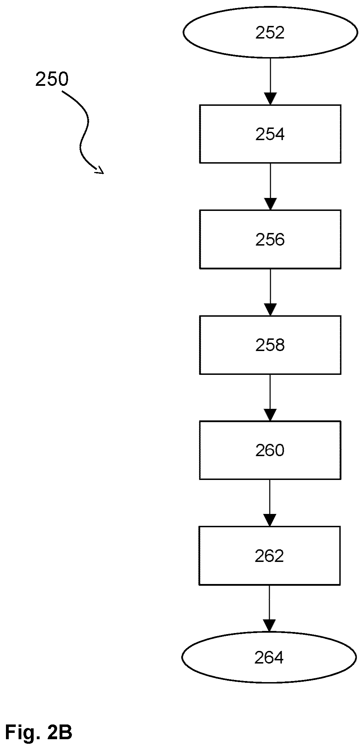

Ein konkretes Ausführungsbeispiel für ein erfindungsgemäßes Zusammenwirken von Mobilgerät 106 und Backend 104 zur Signaturerstellung wird nachfolgend unter Bezug auf die in den Fig. 2A und 2B schematisch dargestellten Abläufe genauer beschrieben. Hierbei zeigt Fig. 2A einen Ablauf eines Verfahrens 200 im Mobilgerät 106. Fig. 2B zeigt einen Ablauf eines korrespondierenden Verfahrens 250 im Backend 104.

Ein Ablauf beginnt im Verfahren 200 in Fig. 2A mit einem vorgelagerten Schritt 202, in dem eine Eingabe des Benutzers 108 empfangen wird. Dies kann bspw. so geschehen wie dies oben für den Vorgang 120 in Fig. 1 beschrieben wurde. In einem Schritt 204 sendet das Mobilgerät 106 eine Anforderung eines Signaturmodus an das Backend 104. In einem korrespondierenden Schritt 252 im Verfahren 250 in Fig. 2B empfängt das Backend 104 die Anforderung. In einem Schritt 254 überprüft das Backend 104 die empfangene Anforderung und wählt darauf basierend in einem Schritt 256 den Signaturmodus unter den Signaturmodi 128, 132, 136 aus.

In einem Schritt 258 sendet das Backend 104 eine Indikation des ausgewählten Signaturmodus an das Mobilgerät 106, also bspw. des Signaturmodus 136. In einem korrespondierendem Schritt 206 empfängt das Mobilgerät 106 die angeforderte Indikation des anzuwendenden Signaturmodus. In einem Schritt 208 initiiert das Mobilgerät das Erstellen einer Signatur entsprechend dem vom Backend 104 ausgewählten und im Schritt 206 vorgegebenen Signaturmodus. Dies kann eine Übergabe des vorgegebenen Signaturmodus an das gesicherte Element 110 beinhalten. In einem Schritt 210 nimmt das Mobilgerät 106 bzw. die App eine Signatur vom gesicherten Element 110 entgegen und sendet diese in einem Schritt 212 an das Backend 104.

In einem korrespondierendem Schritt 260 empfängt das Backend 104 die Signatur bzw. die entsprechenden signierten Daten. In einem Schritt 262 überprüft das Backend 104 die Signatur und sendet in einem Schritt 264 eine Rückmeldung betreffend die Signatur und/oder einen Erfolg einer Aktion, die basierend auf den signierten Daten durchgeführt wurde, an das Mobilgerät 104 (vgl. hierzu die Beschreibung von Vorgang 144 in Fig. 1). In einem korrespondierendem Schritt 214 empfängt das Mobilgerät 106 die Rückmeldung.

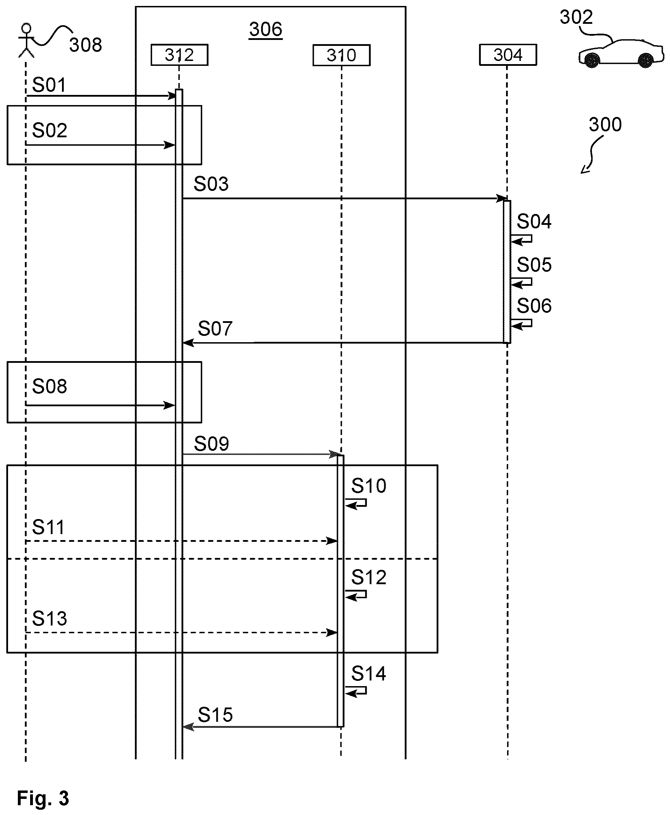

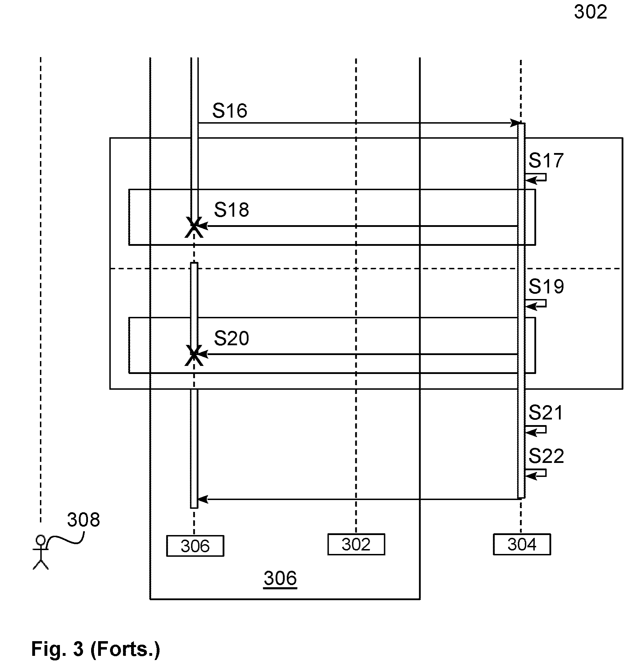

Fig. 3 illustriert in Form eines schematischen Sequenzdiagramms ein weiteres Ausführungsbeispiel eines erfindungsgemäßen Verfahrens 300 für eine Signaturerstellung. Das Verfahren 300 könnte ein konkretes Ausführungsbeispiel für den Ablauf 122 aus Fig. 1 sein, und insofern wird für eine Erläuterung von Einzelheiten wie etwa verwendete Definitionen und Begriffe auf die Beschreibung von Fig. 1 verwiesen.

Für das Verfahren 300 wirken ein Backend 304 für ein nur angedeutetes Fahrzeug 302 und ein Mobilgerät 306 eines Benutzers 308 zusammen. Im Mobilgerät 306 liegt eine Instanz eines Betriebssystems und/oder ein gesichertes Element 310, sowie eine Applikation oder App 312 vor, bei der es sich um eine App für ein Handhaben eines digitalen Fahrzeugschlüssels für das Fahrzeug 302 handeln kann, wobei der digitale Fahrzeugschlüssel im gesicherten Element 310 abgelegt ist. Die App 312 kann von einem Hersteller des Fahrzeugs 302 bereitgestellt sein und wird daher auch als Herstellerapp 312 referenziert.

Das Verfahren beginnt in einem Schritt S01 damit, dass der Benutzer 308 mit der App 312 interagiert, bspw. um den erwähnten digitalen Fahrzeugschlüssel im gesicherten Element 310 abzulegen ("Owner-Pairing") oder für eine Schlüsselweitergabe ("Key-Sharing"). Es sei explizit angemerkt, dass das nachfolgend beschriebene Verfahren zur Signaturerstellung als solches nicht mit einem Ablegen eines im Owner-Pairing oder Key-Sharing erzeugten digitalen Schlüssels verknüpft ist. Die Interaktion in Schritt S01 ist lediglich beispielhaft zu verstehen, nämlich so, dass ein (bspw.) während eines Owner-Pairing oder Key-Sharing erzeugter digitaler Schlüssel danach mit einem Benutzerkonto des Benutzers 308 durch eine Signatur (SIGN API) verknüpft wird. Der Schritt S01 kann auch eine Mehrzahl an Schritten umfassen. Optional kann in einem Schritt S02 eine diesbezügliche Benutzereingabe erfolgen.

In einem Schritt S03 sendet die App (oder der "Client") 312 an den Backend-Server 304 eine Anforderung betreffend eine Signaturerzeugung für einen gegebenen Anwendungsfall, der sich aus der in Schritt S01 vom Benutzer 308 durchgeführten Aktion und/oder im Schritt S02 erfolgten Benutzereingabe ergibt. In einem Schritt S04 überprüft das Backend 304 Voraussetzungen für den gegebenen Anwendungsfall. In einem Schritt S05 erzeugt der Backend-Server 304 eine Session-ID (bspw. eine Einmalinformation).

In einem Schritt S06 setzt der Backend-Server 304 den anzuwendenden Signaturmodus fest. Hierbei kann es sich wie für das Ausführungsbeispiel 100 von Fig. 1 erläutert, um drei Signaturmodi handeln, also etwa einen Signaturmodus, der keine Mitwirkung des Benutzers 308 erfordert, einen Modus, der als Mitwirkung des Benutzers 308 zum mindesten dessen Einwilligung erfordert, und einen Signaturmodus, der als Mitwirkung des Benutzers 308 zum mindesten eine Authentifikation erfordert. In einem Schritt S07 gibt der Backend-Server 304 die Session-ID und den anzuwendenden Signaturmodus an die Client-App 312 zurück.

In einem optionalen Schritt S08 kann eine (weitere) Benutzereingabe erfolgen (diese kann bspw. mit der andauernden Interaktion des Benutzers 308 mit dem Mobilgerät 306 in Zusammenhang stehen, wie für Schritt S01 beschrieben). In einem Schritt S09 sendet die App 312 eine Anforderung zur Erstellung einer Signatur für beliebige Daten ("arbitrary data" gem. CCC-Spezifikation) mit dem digitalen Fahrzeugschlüssel für das Fahrzeug 302 an das Betriebssystem / gesicherte Element 310. Die Anforderung kann den anzuwendenden Signaturmodus sowie zu signierende Daten enthalten. Diese Daten können bspw. die Session-ID, Daten betreffend die App 312 und/oder Daten betreffend die Benutzereingaben der Schritte S02 und S08 umfassen.

Ist der anzuwendende Signaturmodus (von den drei oben beschriebenen Signaturmodi) derjenige, der als Mitwirkung des Benutzers 308 dessen Einwilligung erfordert, initiiert das Betriebssystem / gesicherte Element 310 in einem Schritt S10 die Ausgabe eines Popup-Fensters auf einem Display des Mobilgeräts 306. In einem Schritt S11 bestätigt der Benutzer 308 eine Kenntnisnahme des Popup-Fensters.

Ist der anzuwendende Signaturmodus hingegen derjenige, der als Mitwirkung des Benutzers 308 dessen Authentifikation fordert, initiiert das Betriebssystem / gesicherte Element 310 in einem Schritt S12 die Ausgabe eines Fensters zur Benutzer-Authentifikation auf dem Mobilgerät 306. In einem Schritt S13 führt der Benutzer 308 die geforderte Authentifikation durch Eingabe einer PIN, eines Passworts, mittels Gesichtserkennung etc. durch.

Ist der anzuwendende Signaturmodus hingegen derjenige, der keine Mitwirkung des Benutzers 308 erfordert, entfällt ein Schritt wie einer der Schritte S10 oder S12, d.h., es erfolgt keine Ausgabe auf einer Benutzerschnittstelle des Mobilgeräts 306, sondern das Betriebssystem / gesicherte Element 310 leitet auf den Erhalt der entsprechenden Anforderung in Schritt S09 unmittelbar die Signaturerstellung ein, und der Benutzer 308 erhält keine Kenntnis von der Signaturerstellung.

Für die Signaturerstellung signiert das Betriebssystem / gesicherte Element 310 in einem Schritt S14 die in Schritt S09 übergebenen Daten mit dem digitalen Fahrzeugschlüssel, der im gesicherten Element 310 abgelegt ist. Die Daten werden als "beliebige Daten" signiert. Eine Angabe des angewendeten Signaturmodus wird bei der Erstellung des SIGN-Kommandos als Wert des entsprechenden Datenfelds, dem Verwendungs-Tag (0x93), angegeben.

In einem Schritt S15 wird eine Nachweisstruktur ("Data Attestation") der von der App 312 übergebenen Daten an die App 312 zurückgegeben, sowie eine Framework-Einmalinformation bzgl. dem SIGN-Kommando. Die Nachweisstruktur enthält erforderliche SIGN-Datenfelder einschließlich Verwendungs-Tag und Signatur-Tag.

In einem Schritt S16 sendet die App 312 eine Anforderung zur Signatur-Verifikation an das Backend 304. Die Anforderung enthält die vom gesicherten Element erhaltene Nachweisstruktur mit Framework-Einmalinformation, Client-Daten der App 312, sowie optional Daten betreffend die Benutzereingaben in den Schritten S02 und/oder S08.

Ist der vorgegebene Signaturmodus (von den drei oben beschriebenen Signaturmodi) derjenige, der als Mitwirkung des Benutzers 308 dessen Authentifikation erfordert, überprüft der Backend-Server 304 in einem Schritt S17, ob eine Benutzer-Authentifikation durchgeführt wurde. Wurde ein anderer Modus angewendet, gibt der Server 304 in einem Schritt S18 eine Indikation an die App 312 zurück, dass der falsche Signaturmodus angewendet wurde, und das Verfahren 300 wird beendet.

Ist der vorgegebene Signaturmodus derjenige, der als Mitwirkung des Benutzers 308 dessen Einwilligung erfordert, überprüft der Backend-Server 304 in einem Schritt S19, ob eine Einwilligung des Benutzers eingeholt, oder eine Authentifikation des Benutzers durchgeführt wurde. Sollte die Überprüfung ergeben, dass der Hintergrund-Signaturmodus angewendet wurde, gibt der Server 304 in einem Schritt S20 eine Indikation an die App 312 zurück, dass der falsche Signaturmodus angewendet wurde, und das Verfahren 300 wird beendet.

Ist der vorgegebene Signaturmodus hingegen derjenige, der keine Mitwirkung des Benutzers 308 erfordert, entfällt eine Überprüfung wie im Schritt S17 oder S19 und der Backend-Server 304 leitet unmittelbar die Überprüfung der im Schritt S16 von der App 312 erhaltenen Signatur ein.

Zur Überprüfung der erhaltenen Signatur stellt der Server 304 in einem Schritt S21 die "beliebigen Daten" zusammen, die der Signaturerstellung im gesicherten Element 310 unterlagen. Hier kann der Server Daten aus der erhaltenen Nachweisstruktur zusammenstellen. Die Daten können bspw. eine App-ID der App 312 umfassen, die sich aus dem Kontext ergibt; App-Daten wie die (im Backend 304 gespeicherte) Session-ID, empfangene Daten der Client-App 312, empfangene Daten betreffend die Benutzereingaben in den Schritten S02 und/oder S08; sowie die empfangene Framework-Einmalinformation. Die Signatur kann ebenfalls der Nachweisstruktur entnommen werden. Als Schlüssel für die Verifikation kann das Backend 304 einen öffentlichen Schlüsselanteil des digitalen Fahrzeugschlüssels für das Fahrzeug 302 verwenden.

Verläuft die Verifikation positiv, führt das Backend 304 in einem Schritt S22 eine Aktion durch, die mit der Signaturerstellung bzw. -verifikation im Verfahren 300 abgesichert werden soll. Nach Durchführung der Aktion gibt das Backend 304 in einem Schritt S23 an die Herstellerapp 312 einen Hinweis zurück, dass die Signatur als valide erkannt wurde, dass ggf. die Anforderungen für eine Einwilligung des Benutzers bzw. dessen Authentifikation erfüllt sind, dass die Aktion erfolgreich durchgeführt wurde, etc.

Erfindungsgemäß werden Verfahren zur Signaturerstellung vorgeschlagen, bei denen eine Signatur basierend auf einer Selektion eines Signaturmodus von mehreren Signaturmodi erstellt wird, und wobei von den mehreren Signaturmodi mindestens einer ohne Mitwirken des Benutzers auskommt, also bspw. ohne Einwilligung oder Authentifizierung des Benutzers (wie bspw. bei den anderen Modi). Ein solcher Signaturmodus kann bspw. für ein Signieren von Daten vorgesehen werden, die nicht in erheblichem Maße sicherheitsrelevant sind, d.h., um für solche Fälle eine Möglichkeit bereitzustellen, ein gewisses Sicherheitsniveau beizubehalten, ohne den Benutzer zu behelligen.

Ausführungsformen der Erfindung ermöglichen durch das Vorsehen dieses Signaturmodus, zusätzlich zu einem, zweien, oder mehreren weiteren Signaturmodi mit Mitwirken des Benutzers, für unterschiedliche Daten jeweils eine optimale Balance zwischen Sicherheit und Benutzerkomfort zu gewährleisten. Beispielsweise wird es mit der Erfindung praktikabel, viele wenig sicherheitskritische Anwendungsfälle in ein Sicherheitskonzept mit einzubeziehen, bei denen bisher auf eine Absicherung ganz verzichtet wurde, weil eine Anforderung einer Benutzerintervention (und sei es nur betreffend ein Einholen einer Einwilligung bzw. Zustimmung des Benutzers) unangemessen störend, aufwendig, komplex etc. erschien.

Ausführungsformen der Erfindung können also dazu beitragen, lückenhafte Sicherheitskonzepte im Hinblick auf eine verbesserte Sicherheit weiterzuentwickeln, ohne dass dies Nachteile für einen Benutzerkomfort mit sich bringt. Damit, dass Ausführungsformen der Erfindung ein allgemeines Sicherheitsniveau verbessern können, tragen sie dazu bei, ein Vertrauen in die Praktikabilität und Sicherheit von digitalen Fahrzeugschlüsseln, ein dazugehöriges Schlüsselmanagement etc. zu erhöhen, und dies ist im Hinblick auf die zunehmende Verbreitung digitaler Fahrzeugschlüssel von großer Bedeutung.

Ausführungsformen der Erfindung schlagen konkret eine Erweiterung des SIGN-Kommandos gem. einer CCC-Spezifikation, bzw. einer entsprechenden Programmierschnittstelle (API, "Application Programming Interface"), vor. Diese Erweiterung kann mit geringem Aufwand etwa in bestehende Systeme eingefügt werden.

### Bezugszeichen

- 100: System
- 102: Fahrzeug
- 104: Backend
- 106: Mobilgerät
- 108: Benutzer

- 110: gesichertes Element
- 112: digitaler Fahrzeugschlüssel

- 120: Kopplung
- 122: Datenübermittlung mit Signaturerzeugung und -verifikation

- 124: Anforderung eines Signaturmodus
- 126: Signaturerstellung

- 128: Signaturmodus mit Einwilligung des Benutzers
- 130: Verwendungs-Tag: Indikation einer Zustimmung ohne Authentifikation

- 132: Signaturmodus mit Authentifikation des Benutzers
- 134: Verwendungs-Tag: Indikation einer Zustimmung mit Authentifikation

- 136: Signaturmodus ohne Mitwirkung des Benutzers
- 138: Verwendungs-Tag: Indikation eines Modus ohne Zustimmung, ohne Authentifikation

- 140: Datenübermittlung an Backend
- 142: Überprüfung Benutzermitwirkung
- 144: Überprüfung Signatur
- 146: Durchführung Aktion
- 148: Bestätigung

- 200: Verfahren
- 202: Benutzereingabe
- 204: Senden einer Anforderung eines Signaturmodus
- 206: Empfangen einer Indikation eines Signaturmodus
- 208: Signaturerstellung
- 210: Entgegennehmen der Signatur
- 212: Senden der Signatur
- 214: Empfangen einer Rückmeldung

- 250: Verfahren
- 252: Empfangen einer Anforderung eines Signaturmodus
- 254: Überprüfen der Anforderung
- 256: Auswählen Signaturmodus
- 258: Senden einer Indikation eines Signaturmodus
- 260: Empfangen der Signatur
- 262: Überprüfen der Signatur
- 264: Senden einer Rückmeldung

- 300: Verfahren
- 304: Backend
- 306: Mobilgerät
- 308: Benutzer
- 310: Betriebssystem / gesichertes Element
- 312: App

- S01-S07: Anfordern eines Signaturmodus
- S08-S15: Signieren von Daten
- S16-S23: Verifikation der Signatur

## Patentansprüche

1. Verfahren (200) zum Signieren von Daten mit einem digitalen Fahrzeugschlüssel (112), mit den folgenden Schritten:
- Empfangen (206) einer Indikation eines ausgewählten Signaturmodus, wobei der Signaturmodus unter mindestens einem ersten Signaturmodus (128, 132) und einem zweiten Signaturmodus (136) ausgewählt ist, wobei der mindestens eine erste Signaturmodus (128, 132) ein Signieren unter Mitwirken eines Benutzers (108) betrifft, und der zweite Signaturmodus (136) ein Signieren ohne Mitwirken des Benutzers (108) betrifft;
- Initiieren (208) eines Signierens von Daten entsprechend dem ausgewählten Signaturmodus;
- Senden (212) der signierten Daten; und
- Empfangen (214) einer Rückmeldung bezüglich der signierten Daten.

2. Verfahren (200) nach Anspruch 1, wobei der mindestens eine erste Signaturmodus einen Signaturmodus (128) umfasst, der eine Einwilligung des Benutzers (108) betrifft, und einen weiteren Signaturmodus (132) umfasst, der eine Authentifikation des Benutzers (108) betrifft.

3. Verfahren (200) nach Anspruch 1 oder 2, mit den folgenden weiteren Schritten:
- Übergeben (208) des ausgewählten Signaturmodus an ein gesichertes Element (110); und
- Entgegennehmen (210) einer Signatur von dem gesicherten Element (110) entsprechend dem ausgewählten Signaturmodus.

4. Verfahren (200) nach einem der vorangehenden Ansprüche, wobei der ausgewählte Signaturmodus der zweite Signaturmodus (136) ist, und das gesicherte Element (110) das Signieren ohne Mitwirken des Benutzers (108) durchführt.

5. Verfahren (200) nach einem der vorangehenden Ansprüche, wobei das Signieren ohne Mitwirkung des Benutzers (108) unmerklich für den Benutzer (108) erfolgt.

6. Verfahren (200) nach einem der vorangehenden Ansprüche, wobei für die Indikation des ausgewählten Signaturmodus mindestens zwei unterschiedliche vorbestimmte Werte (130, 134, 138) zur Übermittlung in einem Informationsfeld vorgesehen sind.

7. Verfahren (200) nach Anspruch 6, wobei das Informationsfeld ein SIGN-Datenfeld gemäß einer Spezifikation des Car-Connectivity-Consortiums betrifft.

8. Verfahren (250) zum Überprüfen von mit einem digitalen Fahrzeugschlüssel (112) signierten Daten, mit den folgenden Schritten:
- Senden (258) einer Indikation eines ausgewählten Signaturmodus, wobei der Signaturmodus unter mindestens einem ersten Signaturmodus (128, 132) und einem zweiten Signaturmodus (136) ausgewählt ist, wobei der mindestens eine erste Signaturmodus (128, 132) ein Signieren unter Mitwirken eines Benutzers (108) betrifft, und der zweite Signaturmodus (136) ein Signieren ohne Mitwirken des Benutzers (108) betrifft;
- Empfangen (260) von signierten Daten;
- Überprüfen (262) der empfangenen signierten Daten; und
- Senden (264) einer Rückmeldung basierend auf dem Überprüfen der signierten Daten.

9. Verfahren (250) nach Anspruch 8, mit den weiteren Schritten:
- Empfangen (252) einer Anforderung betreffend das Signieren;
- Überprüfen (254) der empfangenen Anforderung; und
- Auswählen (256) des Signaturmodus unter dem mindestens einen ersten Signaturmodus (128, 132) und dem zweiten Signaturmodus (136) basierend auf dem Überprüfen.

10. Verfahren (250) nach Anspruch 8 oder 9, wobei das Überprüfen (262) der signierten Daten ein Überprüfen einer Signatur basierend auf dem digitalen Fahrzeugschlüssel (112) umfasst.

11. Verfahren (250) nach einem der Ansprüche 8 bis 10, wobei das Überprüfen (262) ein Überprüfen einer Benutzereingabe betreffend eine Aktion betrifft, und wobei das Verfahren den folgenden weiteren Schritt umfasst:
- Durchführen der Aktion nach erfolgreichem Überprüfen, wobei die Rückmeldung das Durchführen der Aktion betrifft.

12. Mobilgerät (106), ausgebildet zum Signieren von Daten mit einem digitalen Fahrzeugschlüssel (112) gemäß einem Verfahren (200) nach einem der Ansprüche 1 bis 7.

13. Mobilgerät (106) nach Anspruch 12, umfassend ein gesichertes Element (110) zur Ablage des digitalen Fahrzeugschlüssels (112).

14. Backend-Server (104), ausgebildet zum Überprüfen von signierten Daten mit einem digitalen Fahrzeugschlüssel (112) gemäß einem Verfahren (250) nach einem der Ansprüche 8 bis 11.

15. System (100), umfassend:
- ein Kraftfahrzeug (102), ausgebildet zur Ablage eines digitalen Fahrzeugschlüssels (112);
- ein Mobilgerät (106) nach Anspruch 12 oder 13, ausgebildet zum Signieren von Daten mit dem digitalen Fahrzeugschlüssel (112); und
- einen Backend-Server (104) nach Anspruch 14, ausgebildet zum Überprüfen von mit dem digitalen Fahrzeugschlüssel (112) signierten Daten.
